# NEUE EUROPÄISCHE PATENTSCHRIFT

(11) **EP 3 239 588 B2**
(45) Veröffentlichungstag und Bekanntmachung des Hinweises auf die Entscheidung über den Einspruch: **11.09.2024**
(45) Hinweis auf die Patenterteilung: 11.08.2021
(21) Anmeldenummer: 16167511.1
(22) Anmeldetag: 28.04.2016
(51) Int. Cl.: F16P 3/14, B23Q 11/00

(54) **VERFAHREN ZUR DETEKTION EINES STOFFS**
METHOD FOR DETECTING A SUBSTANCE
PROCEDE DE DETECTION D'UNE MATIERE

(43) Veröffentlichungstag der Anmeldung: 01.11.2017
(60) Teilanmeldung: 21190333.1
(73) Patentinhaber: Felder KG, 6060 Hall in Tirol (AT); Technische Universität Wien, 1040 Wien (AT)
(72) Erfinder: Weiler, Thomas, 1050 Wien (AT); Caudr, Helmut, 1210 Wien (AT); Bleicher, Friedrich, 1140 Wien (AT)
(74) Vertreter: Torggler & Hofmann Patentanwälte - Innsbruck

(56) Entgegenhaltungen:
- WO-A1-2010/027598
- WO-A1-2010/027598
- WO-A1-2015/130248
- DE-A1- 19 716 035
- DE-A1- 19 716 035
- TR-A1- 201 402 423
- US-A- 3 785 230
- US-A- 4 326 804
- US-A1- 2002 017 176
- US-A1- 2004 017 294
- US-A1- 2004 017 294
- US-A1- 2008 041 204
- US-A1- 2011 308 365
- US-A1- 2014 001 888
- US-A1- 2014 083 269
- US-B1- 7 888 826
- US-B1- 8 336 432

## Beschreibung

Die vorliegende Erfindung betrifft ein Verfahren zur Detektion eines Stoffs, vorzugsweise von menschlichem Gewebe, in einem Umfeld eines bewegbaren Werkzeugs mit den Merkmalen des Oberbegriffs des Anspruchs 1, ein Detektionssystem zur Durchführung des Verfahrens sowie eine Werkzeugmaschine mit einem solchen Detektionssystem.

Aus dem Stand der Technik sind Verfahren zur Detektion von Stoffen in einem Umfeld eines bewegbaren Werkzeugs bekannt, wie beispielsweise aus der EP 1579146 B1 und DE19716035. Bei dem darin beschriebenen Verfahren wird die Annäherung eines Körperteils einer Person an ein rotierendes Sägeblatt einer Kreissäge mittels der Erfassung von Änderungen eines elektromagnetischen Feldes in der Nähe des Sägeblatts erkannt. Die Änderungen des elektrischen Felds durch ein Dielektrikum werden dabei mittels der Verstimmung einer Antenne detektiert. Eine Unterscheidung, ob ein Werkstück oder ein Finger der das Werkstück führenden Person mit dem Sägeblatt in Berührung kommt bzw. kommen wird, kann durch eine Charakterisierung der Veränderung der Verstimmung der Antenne erreicht werden.

Aus der WO 2010/027598 A1 ist ein Erfassungssystem zur Detektion von Berührungen von leitfähigen Gegenständen mit einem Sägeblatt einer Säge bekannt. Die Detektion von Berührungen erfolgt durch Erfassung eines Stroms, welcher zum Sägeblatt und zum das Sägeblatt kontaktieren, leitfähigen Gegenstand fließt.

Aus der US 2004/017294 A1 ist ein Sicherheitssystem mit einer kapazitiven Spannungsteilerbrücke für eine Tischkreissäge bekannt, bei welchem die Annäherung an das eine Elektrode eines Kondensators ausbildende Kreissägeblatt, bzw. auch eine Berührung desselben, detektiert werden kann.

Nachteilig an aus dem Stand der Technik bekannten Verfahren sind dabei die mangelnde Zuverlässigkeit bei Erkennung einer Gefahrensituation bei gleichzeitiger Vermeidung von Fehlerkennungen (sogenannten "false positives"), die mangelnde Empfindlichkeit bzw. Zuverlässigkeit bei der Unterscheidung zwischen einem Werkstück und menschlichem Gewebe, sowie die mangelnde Zuverlässigkeit bzw. Empfindlichkeit bei der Detektion einer Berührung eines Werkzeugs, beispielsweise eines Sägeblatts, durch menschliches Gewebe. Zudem sind Umsetzungen von aus dem Stand der Technik bekannten Verfahren, also Detektionssysteme zur Durchführung solcher Verfahren, gewöhnlich mit dem Einsatz von zusätzlichen Sensoren, wie z. B. Kamerasystemen, Lasern oder Infrarotsensoren, verbunden.

Dementsprechend aufwändig gestaltet sind die dadurch nötigen baulichen Änderungen an Werkzeugmaschinen mit solchen Detektionssystemen.

Aufgabe der vorliegenden Erfindung ist es daher, ein gegenüber dem Stand der Technik verbessertes Verfahren zur Detektion eines Stoffs in einem Umfeld eines bewegbaren Werkzeugs, ein Detektionssystem zur Durchführung des Verfahrens, sowie eine Werkzeugmaschine mit einem solchen Detektionssystem anzugeben.

Insbesondere sollen die oben genannten Nachteile hinsichtlich der Zuverlässigkeit, Empfindlichkeit und Komplexität behoben werden.

Die gestellte Aufgabe wird durch ein Verfahren mit den Merkmalen des Anspruchs 1, ein Detektionssystem mit den Merkmalen des Anspruchs 13 sowie einer Werkzeugmaschine mit einem solchen Detektionssystem gelöst. Vorteilhafte Ausführungsformen der Erfindung sind in den abhängigen Ansprüchen definiert.

Die Aufgabe wird erfindungsgemäß dadurch gelöst, dass eine periodische Änderung der Kapazität erfasst wird, wobei diese Änderung dadurch hervorgerufen wird, dass der Stoff in einem Bereich relativ zum Werkzeug angeordnet ist und sich bei einer Bewegung des Werkzeugs eine geometrische Eigenschaft des Werkzeugs in diesem Bereich periodisch ändert. Der Bereich kann sich dabei um den zu detektierenden Stoff herum erstrecken. So kann der Bereich also beispielsweise einem Raumbereich mit einem radialen Abstand vom zu detektierenden Stoff von mehreren Zentimetern um den Stoff herum entsprechen. Mit anderen Worten kann durch sich bei Bewegung des Werkzeugs periodisch ändernde geometrische Verhältnisse an einem Punkt - insbesondere am Punkt des geringsten Normalabstandes - zwischen Stoff und Werkzeug eine periodische Änderung der Kapazität hervorgerufen werden und diese zur Detektion des Stoffs im Umfeld des bewegbaren Werkzeugs erfasst werden. Die Ausdehnung bzw. Erstreckung des Bereichs kann mit der Empfindlichkeit der Erfassung der Änderung der Kapazität zusammenhängen.

Die von zumindest einem Teil des bewegbaren Werkzeugs ausgebildete Elektrode und die von diesem elektrisch isolierte Gegenelektrode bilden dabei eine Kapazität aus, die beispielsweise einem Plattenkondensator entsprechen kann. Die Kapazität hängt von den Elektrodenflächen, dem Abstand der Elektroden sowie einem sich im elektrischen Feld zwischen den (bzw. in einem Randbereich der) Elektroden befindenden Stoff mit bestimmten elektrischen Eigenschaften, insbesondere bestimmten dielektrischen Eigenschaften, ab. Dabei können auch unterschiedliche Dielektrika mit unterschiedlichen Permittivitäten (Dielektrizitätskonstanten) Einfluss auf die Kapazität nehmen. So kann sich beispielsweise der zu detektierende Stoff, beispielsweise menschliches Gewebe in Form eines Körperteils eines Benutzers des bewegbaren Werkzeugs, von der Permittivität des zu bearbeitenden Werkstoffs, beispielsweise Holz, Kunststoff oder Faserverbundwerkstoffe, unterscheiden. Wird also eine Änderung der Kapazität detektiert, so kann ein Rückschluss auf die Veränderung der relativen Permittivität, also auf die Anwesenheit eines Stoffs, gezogen werden. Durch eine sich in dem Bereich durch eine Bewegung des Werkzeugs periodisch ändernde geometrische Eigenschaft kann sich nun einerseits - insbesondere lokal im Bereich des zu detektierenden Stoffs - die von zumindest einem Teil des Werkzeugs ausgebildete Elektrodenfläche und/oder andererseits der Abstand der von zumindest einem Teil des Werkzeugs ausgebildeten Elektrodenfläche zur elektrisch von dieser isolierten Gegenelektrode ändern. Dies kann zu einer periodischen Änderung der Kapazität führen. Bei Anwesenheit des zu detektierenden Stoffs in einem Bereich des Werkzeugs, in welchem die sich periodisch ändernde geometrische Eigenschaft auftritt, wird somit eine verstärkte periodische Änderung der Kapazität hervorgerufen. Das Umfeld kann dabei einem unmittelbaren Gefahrenbereich des Werkzeugs, also insbesondere ein Nahbereich von mehreren Zentimetern bis Millimetern, entsprechen, also einem Umfeld, in welchem ein unerwünschter Eingriff des Werkzeugs in den Stoff stattfinden kann. Allgemein kann eine sich in dem Bereich des Stoffs bei Bewegung des Werkzeugs periodisch ändernde geometrische Eigenschaft in einem Umfangs- bzw. Randbereich des Werkzeugs - insbesondere in einem Wirkbereich des Werkzeugs - gegeben sein. Durch einen sich in einem Umfeld davon befindenden, zu detektierenden Stoff kann nun aufgrund dessen dielektrischer Eigenschaften Einfluss auf das dort herrschende elektrische Feld (insbesondere auf ein austretendes Randfeld) genommen werden, wodurch eine periodische Änderung der Kapazität hervorgerufen werden kann.

Ein solches Verfahren zeichnet sich durch hohe Zuverlässigkeit und Empfindlichkeit bei der Erkennung von Stoffen in einem Umfeld, insbesondere in einem Nahbereich, eines bewegbaren Werkzeugs aus. Dabei können Gefahrensituationen, wie etwa das ungewollte Berühren eines bewegbaren Werkzeugs durch einen Benutzer, frühzeitig erkannt und vermieden werden. Auch lassen sich Fehlstellen im zu bearbeitenden Werkstoff, wie etwa Nägel oder andere Fremdkörper in Holzwerkstoffen, erkennen. Auch ist ein solches Verfahren unempfindlich gegenüber äußerer Einflüsse, wie etwa Verschmutzungen durch Staub, da sich diese zwar als Gleichanteil auf die Kapazität auswirken können, jedoch den periodischen Anteil im Wesentlichen unverändert lassen.

Dabei kann vorgesehen sein, dass das Werkzeug ein zerspanendes Werkzeug, vorzugsweise ein Kreissägeblatt, ist. Zerspanen bezeichnet dabei ein mechanisches Bearbeitungsverfahren, bei denen Material von dem zu bearbeitenden Werkstoff durch das Werkzeug abgetragen wird. Beispiele für zerspanende Werkzeuge sind Sägeblätter, insbesondere Kreissägeblätter, oder Sägebänder von Bandsägen oder auch Fräswerkzeuge, wie Schaftfräser oder Walzenfräser.

Dabei kann auch vorgesehen sein, dass die sich in dem Bereich bei Bewegung des Werkzeugs periodisch ändernde geometrische Eigenschaft durch eine Schneidengeometrie zumindest einer Werkzeugschneide, insbesondere durch eine Abfolge von Sägezähnen, und/oder zumindest eine Materialaussparung und/oder zumindest eine Materialauftragung und/oder zumindest eine Ausformung des Werkzeugs gegeben ist. Als Werkzeugschneide kann dabei der bei der Bearbeitung des Werkstoffs wirksame Teil des Werkzeugs verstanden werden. Als Beispiel kann hier eine Abfolge von Sägezähnen genannt werden, welche durch ihre Zahnhöhe und die zwischen einzelnen Sägezähnen bestehende Zahnlücke eine geometrische Eigenschaft des Werkzeugs definieren. Bei einer Bewegung eines so ausgebildeten Werkzeugs ist die sich in dem Bereich um den Stoff periodisch ändernde geometrische Eigenschaft durch die An- bzw. Abwesenheit der Werkzeugschneide, also beispielsweise eines Sägezahns, in dem Bereich gegeben, wodurch sich die Elektrodenfläche (durch Änderung der Lage) und/oder der Abstand des Werkzeugs zum Stoff in diesem Bereich periodisch ändert. Bei einer gewellten bzw. geschränkten (Ausbiegung der Werkzeugschneiden) Ausbildung des Werkzeugs kann dies zusätzlich eine periodische Änderung des Abstands der vom Werkzeug ausgebildeten Elektrode bewirken. Bei zumindest einer Materialaussparung des Werkzeugs, beispielsweise einer Materialausnehmung bzw. einer Einbuchtung, kann bei Bewegung des Werkzeugs ebenfalls eine periodische Änderung der Elektrodenfläche des Werkzeugs erreicht werden. Durch eine Materialauftragung kann bei einer Bewegung des Werkzeugs beispielsweise eine periodische Änderung des Elektrodenabstands und der Lage der Fläche der vom Werkzeug ausgebildeten Elektrode erreicht werden. Bei einer Ausformung des Werkzeugs, beispielsweise bei einer welligen Ausführung des Werkzeugs, kann ebenso bei Bewegung des Werkzeugs eine periodische Änderung der Elektrodenfläche und/oder des Elektrodenabstands der von dem Werkzeug ausgebildeten Elektrode erreicht werden.

Grundsätzlich kann vorgesehen sein, dass die Bewegung des Werkzeugs eine geführte Bewegung, vorzugsweise eine Rotationsbewegung, ist. Durch die Führung der Bewegung des Werkzeugs kann dieses in eine Zwangsbewegung versetzt werden. So kann das Werkzeug am zu bearbeitenden Werkstoff unter gegenseitig bestimmter Führung zur Wirkung gebracht werden. Beispiele für solche Bewegungen sind etwa eine Rotationsbewegung, eine linear geführte Bewegung oder eine Pendel- bzw. Pendelhubbewegung. Die geführte Bewegung kann auch periodisch ablaufen.

Auch kann vorgesehen sein, dass die Gegenelektrode von zumindest einem Teil eines Gehäuses, in welchem das Werkzeug in Montagelage angeordnet ist, und/oder einem Anbauteil ausgebildet wird. Durch eine Ausbildung der Gegenelektrode von einem Teil des Gehäuses, in welchem das Werkzeug in Montagelage angeordnet ist, kann ein bestehender Teil der Werkzeugmaschine zur Ausbildung der Kapazität herangezogen werden, wodurch auch auf den Einsatz von zusätzlichen Sensoren verzichtet werden kann. Als Gegenelektrode kann sich dabei ein elektrisch leitender, beispielsweise metallischer, Teil des Gehäuses eignen. Es ist jedoch auch denkbar, die Gegenelektrode durch einen geeigneten Anbauteil, beispielsweise ein flächig ausgebildetes Metallteil, auszubilden, was beispielsweise bei einem elektrisch nicht leitfähigen Gehäuse von Vorteil sein kann.

Es kann von Vorteil sein, dass weiter die Periodizität der sich in dem Bereich bei Bewegung des Werkzeugs periodisch ändernden geometrischen Eigenschaft des Werkzeugs erfasst wird. Durch die Erfassung der Periodizität bzw. Frequenz der sich bei Bewegung des Werkzeugs in dem Bereich periodisch ändernden geometrischen Eigenschaft des Werkzeugs kann sich die periodische Änderung der Kapazität leichter bzw. besser charakterisieren lassen. Die Periodizität bzw. Frequenz kann sich dabei durch Erfassung der Periodendauer erfassen lassen. Dabei kann beispielsweise die Motordrehzahl eines das Werkzeug bewegenden Antriebs erfasst werden. Auch kann die Periodizität oder Frequenz beispielsweise über induktive Abnehmer oder Lichtschranken erfasst werden.

Es ist erfindungsgemäß vorgesehen, dass zur Erfassung der Änderung der Kapazität die Kapazität als ein frequenzbestimmendes Element einer elektronischen Oszillatorschaltung, vorzugsweise einer LC-Oszillatorschaltung, eingesetzt wird. Als eine elektronische Oszillatorschaltung kann dabei eine elektronische Schaltung zur Erzeugung einer periodischen Wechselspannung mit einer gewissen Oszillator- bzw. Schwingungsfrequenz und einer gewissen Oszillator- bzw. Schwingungsamplitude der Wechselspannung verstanden werden. Dadurch, dass die Kapazität als ein frequenzbestimmendes Element der elektronischen Oszillatorschaltung eingesetzt wird, kann sich die Kapazität über die Oszillatorfrequenz charakterisieren lassen. Bei einer Ausbildung der Oszillatorschaltung als eine LC-Oszillatorschaltung kann die Kapazität in Verbindung mit einer Induktivität (Festinduktivität) eine resonanzfähige elektrische Schaltung ausbilden.

Dabei kann vorteilhaft sein, dass eine durch die periodische Änderung der Kapazität verursachte Frequenzmodulation der Oszillatorfrequenz der Oszillatorschaltung zur Detektion des zu detektierenden Stoffs erfasst wird. Ist die Kapazität als ein frequenzbestimmendes Element einer elektronischen Oszillatorschaltung eingesetzt, führen Änderungen der Kapazität zu Änderungen der Oszillatorfrequenz, wobei insbesondere periodische Änderungen der Kapazität zu periodischen Änderungen der Oszillatorfrequenz führen. Eine so entstehende Frequenzmodulation der Oszillatorfrequenz eignet sich insbesondere zur Detektion des zu detektierenden Stoffs, da ein Auftreten einer solchen Modulation direkt mit der Anwesenheit des zu detektierenden Stoffs im Bereich des bewegbaren Werkzeugs verbunden ist und beispielsweise als Indikator für eine Gefahrensituation (menschliches Gewebe im Nahbereich des bewegten Werkzeugs) verwendet werden kann.

Weiter kann dabei vorteilhaft sein, dass die Frequenzmodulation unter Verwendung der Periodizität der sich periodisch ändernden geometrischen Eigenschaft des Werkzeugs demoduliert wird. Da die Frequenzmodulation mit einer im Wesentlichen der Periodizität der sich bei Bewegung des Werkzeugs in dem Bereich periodisch ändernden geometrischen Eigenschaft des Werkzeugs entsprechenden Modulationsfrequenz auftritt, kann durch eine entsprechende Demodulation die Anwesenheit des zu detektierenden Stoffs besonders sensitiv und zuverlässig erkannt werden. Das Ausgangssignal einer solchen FM-Demodulation ist somit im Wesentlichen ein Signal mit einer der Periodizität der sich bei Bewegung des Werkzeugs in dem Bereich periodisch ändernden geometrischen Eigenschaft entsprechenden Signalfrequenz und einer Amplitude, welche mit den dielektrischen Eigenschaften (Permittivität) des zu detektierenden Stoffs und dessen Nähe zum bewegten Werkzeug korreliert. Das Auftreten eines solchen Signals kann als zuverlässiger Indikator für eine Gefahrensituation verwendet werden.

Auch kann dabei vorteilhaft sein, dass weiter eine - insbesondere durch Berührung des Werkzeugs durch den zu detektierenden Stoff verursachte - Amplitudenmodulation der Oszillatoramplitude der Oszillatorschaltung erfasst wird. Durch eine direkte Berührung des Werkzeugs durch den zu detektierenden Stoff, also beispielsweise eine Berührung des Werkzeugs durch menschliches Gewebe, bewirkt eine Dämpfung der Oszillatoramplitude, was bei einem bewegten Werkzeug analog zur Frequenzmodulation auch eine Amplitudenmodulation der Oszillatoramplitude mit im Wesentlichen der Periodizität der sich bei Bewegung des Werkzeugs in dem Bereich periodisch ändernden geometrischen Eigenschaft zur Folge hat. Eine Dämpfung bzw. ein Einbruch der Oszillatoramplitude der Oszillatorschaltung kann somit der Detektion einer Kontaktierung des Werkzeugs durch den zu detektierenden Stoff dienen. Die Detektion einer periodischen Amplitudenmodulation bzw. Dämpfung der Oszillatoramplitude der Oszillatorschaltung kann das Verfahren gegen Gleichanteile desensibilisieren und kann somit die Toleranz gegenüber Werkstoffen mit bestimmten dielektrischen Eigenschaften, welche beispielsweise bei feuchtem Holz oder schwach leitfähigen Werkstoffen gegeben sind, erhöhen.

Dabei kann auch vorteilhaft sein, dass die Amplitudenmodulation unter Verwendung der Periodizität der sich in dem Bereich periodisch ändernden geometrischen Eigenschaft des Werkzeugs demoduliert wird. Analog zur zuvor beschriebenen FM-Demodulation kann eine AM-Demodulation durchgeführt werden und so Informationen über eine stattfindende Berührung bzw. Kontaktierung des zu detektierenden Stoffs mit dem Werkzeug gewonnen werden. Das Ausgangssignal der AM-Demodulation kann dabei ein Signal mit einer im Wesentlichen der Periodizität der sich in dem Bereich bei Bewegung des Werkzeugs periodisch ändernden geometrischen Eigenschaft entsprechenden Signalfrequenz sein, dessen Signalamplitude der periodischen Dämpfung der Oszillatoramplitude proportional ist.

Es kann auch von Vorteil sein, dass weiter eine Änderung der Gesamtkapazität der Kapazität zur Detektion des zu detektierenden Stoffs im Fernbereich des Werkzeugs erfasst wird. Bei einer Annäherung des zu detektierenden Stoffs im Fernbereich des Werkzeugs, beispielsweise bei einer Annäherung an das Werkzeug aus einer Entfernung von mehreren Dezimetern, kann es zu einer allgemeinen Kapazitätszunahme und somit Änderung der Gesamtkapazität der Kapazität kommen. Dadurch kann beispielsweise eine schnelle Annäherung des zu detektierenden Stoffs an das Werkzeug erkannt werden. Dabei kann die Änderungsrate der Änderung der Gesamtkapazität der Kapazität erfasst werden oder auch eine Änderungsrate einer mit der Kapazität verbundenen Oszillatorfrequenz, sowie auch jeweils das Vorzeichen der Änderungsrate, erfasst werden.

Es kann weiter von Vorteil sein, dass zur Erfassung der Änderung der Kapazität zumindest eine Kenngröße der mit der Kapazität verbundenen Impedanz, vorzugsweise der Ersatzserienwiderstand, erfasst wird. Durch die Erfassung einer Kenngröße der mit der Kapazität verbundenen Impedanz kann direkt auf eine Anwesenheit des zu detektierenden Stoffs geschlossen werden. Dabei kann speziell bei Erfassung des Ersatzserienwiderstands (ESR) effektiv der Widerstand zwischen dem Werkzeug und der elektrisch davon isolierten Gegenelektrode erfasst werden, wodurch das Widerstandssignal als zuverlässiger Indikator für eine Gefahrensituation, insbesondere zur Erkennung einer Berührung des Stoffs mit dem Werkzeug, herangezogen werden kann.

Dadurch kann beispielsweise eine langsame Annäherung an das Werkzeug 2 erlaubt werden, da eine darauf folgende Berührung sicher erkannt werden kann. Auch ist denkbar, das Lade- bzw. Entladeverhalten der Kapazität zu charakterisieren und so beispielsweise den Momentanwert des Wechselstromwiderstands zu bestimmen.

Schutz wird auch begehrt für ein Detektionssystem zur Durchführung des wie zuvor beschriebenen Verfahrens. Das Detektionssystem kann dabei ein bewegbares Werkzeug und eine von dem Werkzeug elektrisch isolierte Gegenelektrode aufweisen, wobei dabei von dem Werkzeug und der Gegenelektrode eine Kapazität ausgebildet wird. Das Werkzeug kann zudem eine sich bei Bewegung periodisch ändernde geometrische Eigenschaft aufweisen. Weiter kann das Detektionssystem eine Vorrichtung zur Erfassung der von dem Werkzeug und der Gegenelektrode ausgebildeten Kapazität umfassen. Die Vorrichtung kann auf verschiedene, beispielsweise wie zuvor beschriebene, Art und Weise ausgebildet sein. Durch ein solches Detektionssystem kann eine zuverlässige und empfindliche Detektion eines zu detektierenden Stoffs in einem Bereich, insbesondere in einem Gefahrenbereich, eines bewegbaren Werkzeugs ermöglicht werden. Ein solches Detektionssystem zeichnet sich durch hohe Zuverlässigkeit und unkomplizierte Sensorik aus.

Weiter wird Schutz für eine Werkzeugmaschine mit einem solchen Detektionssystem begehrt. Insbesondere kann eine solche Werkzeugmaschine als Formatkreissäge mit beispielsweise einem Schiebetisch und einem Sägeaggregat ausgebildet sein. Eine solche Werkzeugmaschine zeichnet sich durch große Bediensicherheit und Zuverlässigkeit aus. Zur Ausbildung einer solchen Werkzeugmaschine sind zudem nur geringe bauliche Änderungen nötig, so dass sich beispielsweise auch bestehende Werkzeugmaschinen einfach nachrüsten bzw. umbauen lassen können.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine perspektivische Ansicht einer schematischen Darstellung einer Werkzeugmaschine,
- Fig. 2a bis 2f: den Verlauf einer Annäherung eines zu detektierenden Stoffs an ein bewegtes Werkzeug,
- Fig. 3a bis 3f: den Verlauf einer Annäherung eines zu detektierenden Stoffs sowie eines zu bearbeitenden Werkstoffs an ein bewegtes Werkzeug,
- Fig. 4a bis 4f: den Verlauf einer Annäherung und Berührung eines zu detektierenden Stoffs an ein bewegtes Werkzeug bzw. mit einem bewegten Werkzeug,
- Fig. 5a bis 5f: eine Annäherung eines zu detektierenden Stoffs an ein bewegtes Werkzeug aus einem Fernbereich,
- Fig. 6a bis 6h: verschiedene Ausführungen eines bewegten Werkzeugs,
- Fig. 7: ein Blockschaltbild eines Detektionssystems,
- Fig. 8: ein Blockschaltbild eines Detektionssystems und
- Fig. 9a bis 9c: Detaildarstellungen zu Teilen eines Detektionssystems.

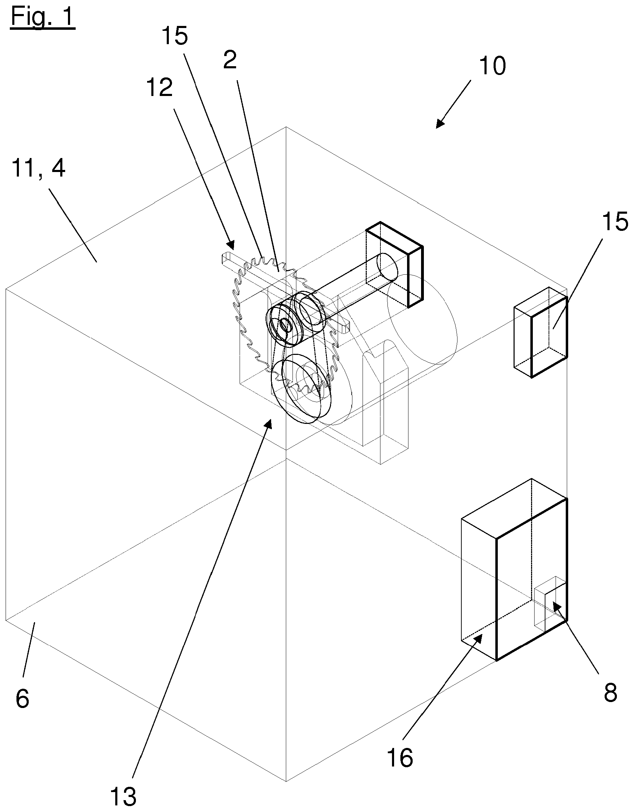

Fig. 1 zeigt eine stark vereinfachte schematische Darstellung einer als Tischkreissäge ausgebildeten Werkzeugmaschine 10 mit einem Gehäuse 6, einem Sägetisch 11 und einem als Kreissägeblatt ausgebildeten Werkzeug 2. Das Werkzeug 2 ist dabei in einer Öffnung 12 des Sägetischs 11 angeordnet und steht teilweise aus dieser hervor. Das Werkzeug 2 kann von einem im Innenbereich des Gehäuses 6 angeordneten Antriebs 13 angetrieben bzw. bewegt werden. Der Antrieb 13 kann beispielsweise einen Elektromotor und einen Antriebsriemen aufweisen. Die Werkzeugmaschine 10 weist weiter Bedienelemente 15, welche einen Ein/Ausschalter, Auswahlmöglichkeiten für Betriebsmodi sowie Statusanzeigen umfassen können, auf. In der schematisch dargestellten Ausführung der Werkzeugmaschine 10 ist ein Detektionssystem 8 zur Durchführung eines erfindungsgemäßen Detektionsverfahrens in einem Schaltkasten 16 angeordnet. Bei Betrieb der Werkzeugmaschine 10 kann sich durch das bewegte Werkzeug 2, also beispielsweise durch ein rotierendes Kreissägeblatt, ein Gefahrenbereich für einen Benutzer ergeben, welcher durch die bewegten Sägezähne 20 des als Kreissägeblatt ausgeführten Werkzeugs 2 ergibt.

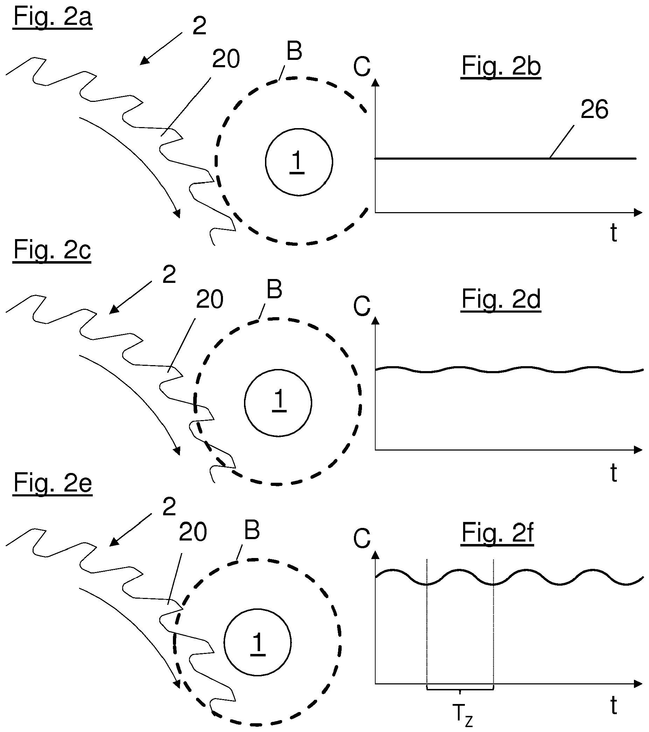

Eine solche Gefahrensituation ist in den Figuren 2a bis 2f illustriert. In Fig. 2a ist dabei ein als ein Kreissägeblatt ausgeführtes Werkzeug 2 mit daran ausgebildeten Sägezähnen 20 dargestellt. Die Bewegung des Werkzeugs, hier eine Rotationsbewegung, ist durch einen gekrümmten Pfeil stilistisch dargestellt. Dabei wird vom Werkzeug 2 und einer hier nicht dargestellten Gegenelektrode 4 eine Kapazität 5 ausgebildet. Ein zu detektierender Stoff 1, beispielsweise ein Finger eines Benutzers, befindet sich in einem Umfeld, genauer gesagt in einem Fernbereich, der Sägezähne 20. Als Fernbereich kann hier ein Abstand des zu detektierenden Stoffs 1 von einigen Dezimetern vom Werkzeug 2 verstanden werden. Um den Stoff 1 herum ist der hier kreisförmig dargestellte Bereich B gezeigt. Der Bereich B erstreckt sich dabei über einen gewissen Raumbereich um den Stoff 1 herum. So wie dargestellt entspricht der Bereich B dem Umfangsbereich um den Stoff 1, innerhalb welchem sich bei bewegtem Werkzeug 2 eine durch sich in dem Bereich B periodisch ändernde geometrische Eigenschaft des bewegten Werkzeugs 2 hervorgerufene Änderung der Kapazität 5 detektieren lässt. Die Ausdehnung des Bereichs B kann mit der Empfindlichkeit der Erfassung der Änderung der Kapazität 5 zusammenhängen.

Die sich im Bereich B periodisch ändernde geometrische Eigenschaft des bewegten Werkzeugs 2 ist in den Fig. 2a bis 2f durch die Sägezähne 20, welche eine gewisse Fläche aufweisen und umfänglich vom Werkzeug 2 abstehend ausgebildet sind, gegeben. Fig. 2b zeigt den zeitlichen Verlauf eines Kapazitätssignals 26 der vom Werkzeug 2 und der Gegenelektrode 4 (hier nicht gezeigt, siehe beispielsweise Fig. 10) ausgebildeten Kapazität 5. Auf der mit t bezeichneten Abszisse ist dabei die Zeit aufgetragen und auf der mit C bezeichneten Ordinate der Wert C der Kapazität 5. Dabei ist der Fig. 2b zu entnehmen, dass bei der in Fig. 2a gezeigten Positionierung des zu detektierenden Stoffs in einem Fernbereich relativ zum bewegten Werkzeug 2 noch keine wesentlichen Änderung der Kapazität 5 hervorgerufen wird, da hier innerhalb des Bereichs B keine sich bei Bewegung periodisch ändernde geometrische Eigenschaft des bewegten Werkzeugs 2 gegeben ist.

In Fig. 2c ist der zu detektierende Stoff hingegen bereits in einem Umfeld des bewegten Werkzeugs 2 mit den an diesem ausgebildeten Sägezähnen 20, in welchem eine periodische Änderung der Kapazität 5 hervorgerufen wird. Im Bereich B um den zu detektierender Stoff 1, beispielsweise ein Finger eines Benutzers, befinden sich Teile der Sägezähne 20. Der Bereich B kann hier einen Bereich um den zu detektierenden Stoff 1 von einigen Zentimetern bzw. Millimetern vom Werkzeug 2 umfassen. Bei einem vorhandenen Stoff 1 und einem bewegten Werkzeug 2 werden periodisch Sägezähne 20 am Stoff 1 vorbeibewegt und das von den Sägezähnen 20 ausgehende elektrische Feld der Kapazität 5 durch die dielektrischen Eigenschaften des Stoffs 1 so beeinflusst, dass es zu einer periodischen Änderung der Kapazität kommt. Dies ist durch einen welligen, hier im Wesentlichen sinusförmigen Verlauf des Werts C illustriert. Auch ist in Fig. 2d zu erkennen, dass sich der Gesamtwert des Werts C der Kapazität 5 durch die Annäherung des zu detektierenden Stoffs 1 an das Werkzeug 2 insgesamt erhöht hat. Dies entspricht also im Wesentlichen einem Gleichanteil des Werts C der Kapazität 5. Die sich durch die sich im Bereich B periodisch ändernde geometrische Eigenschaft des Werkzeugs 2 ergebende Änderung der Kapazität 5 entspricht im Wesentlichen einem Wechselanteil.

In Fig. 2e ist ein unmittelbar an das Werkzeug 2 angenäherter Stoff 1 gezeigt, wobei durch die Bewegung des Werkzeugs 2 die an diesem in Form von Sägezähnen 20 ausgebildeten Werkzeugschneiden (bzw. auch die Zwischenräume zwischen den Werkzeugschneiden) innerhalb des Bereichs B am Stoff 1 vorbeibewegt werden. Dadurch wird, wie zuvor beschrieben, durch die sich örtlich (also auf den Bereich B bezogen) periodisch ändernde Lage der Elektrodenfläche des Werkzeugs 2 eine periodische Änderung der Kapazität 5 hervorgerufen, wie dies auch in Fig. 2f illustriert ist. Dabei ist Fig. 2f auch zu entnehmen, dass es durch die weitere Annäherung des Stoffs 1 an das Werkzeug 2 zu einer Änderung (Zunahme) der Gesamtkapazität der Kapazität 5 gekommen ist. Der sich periodisch ändernde Anteil der Kapazität 5 weist eine Periodendauer T_{Z} auf, welche invers proportional zur Periodizität f_{Z} ist. Die Periodendauer T_{Z} entspricht dabei im Wesentlichen der Zeitdauer, welche zwischen der Vorbeibewegung eines Sägezahns 20 und eines auf diesen folgenden Sägezahns am Stoff 1 benötigt wird. Durch die unmittelbare Annäherung, beispielsweise auf einen Abstand von wenigen Millimetern, des Stoffs 1 an die Sägezähne 20 des Werkzeugs 2 ist die dadurch hervorgerufene periodische Änderung der Kapazität 5 besonders stark ausgeprägt.

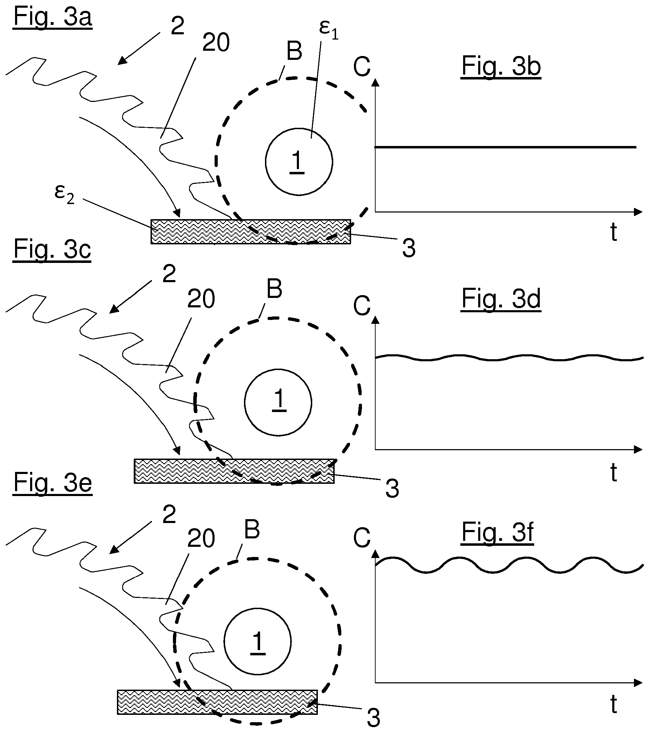

In den Figuren 3a bis 3f ist eine zu den Figuren 2a bis 2f analoge Situation dargestellt, wobei hier jedoch zusätzlich zum Stoff 1 ein vom Werkzeug 2 zu bearbeitender Werkstoff 3 dargestellt ist. Der Stoff 1 und der zu bearbeitende Werkstoff 3 können unterschiedliche elektrische Eigenschaften, insbesondere unterschiedliche dielektrische Eigenschaften, aufweisen. Der Stoff 1 weist dabei eine erste Permittivität ε₁ und der Werkstoff 3 eine zweite Permittivität ε₂ auf. Bei unterschiedlichen Permittivitäten ε₁, ε₂ werden also prinzipiell vom Stoff 1 und dem Werkzeug 2 unterschiedlich große Einflüsse auf elektrische Felder genommen. Diese unterschiedlich starken Einflüsse auf elektrische Felder können zur Unterscheidung eines Stoffs 1 von einem Werkstoff 3 in einem Umfeld des Werkzeugs 2 herangezogen werden.

In Fig. 3a ist ein mit dem Werkzeug 2 in Eingriff stehender Werkstoff 3 und ein sich in einem gewissen Abstand vom Werkzeug 2 befindender Stoff 1 gezeigt. Auch hier ist der Bereich B um den Stoff 1 dargestellt. Bei Vergleich des in Fig. 3b dargestellten Werts C mit dem in Fig. 2b gezeigten Verlauf ist zu erkennen, dass die Gesamtkapazität der Kapazität 5 durch die Anwesenheit des Werkstoffs 3 zwar insgesamt erhöht ist, jedoch bei genügend großen Unterschieden in den dielektrischen Eigenschaften des Werkstoffs 3 und des zu detektierenden Stoffs 1 keine große periodische Änderung der Kapazität 5 hervorgerufen wird. Dabei wird davon ausgegangen, dass sich die dielektrischen Eigenschaften, also die Permittivitäten ε₁, ε₂, des Werkstoffs 3 und des zu detektierenden Stoffs 1 deutlich unterscheiden. So unterscheiden sich beispielsweise die relativen Permittivitäten von menschlichem Gewebe und Holz um etwa einen Faktor 20, was sich auch entsprechend auf die Größe der Änderung der Kapazität auswirkt. Bei genauer Betrachtung wird auch eine Annäherung eines Werkstoffs 3 mit einer geringen Permittivität ε₂ eine periodische Änderung der Kapazität 5 hervorrufen, in der Praxis kann dies jedoch gegenüber der von einem zu detektierenden Stoff 1 mit hoher Permittivität ε₁ hervorgerufenen periodischen Änderung der Kapazität 5 vernachlässigt werden.

In Fig. 3c ist der bearbeitete Werkstoff 3 und der zu detektierende Stoff 1 nach einer weiteren Annäherung an das bewegte Werkzeug 2 gezeigt. Teile des Werkzeugs 2 dringen in den Bereich B ein. Dem in Fig. 3d gezeigten Verlauf des Werts der Kapazität 5 ist dabei zu entnehmen, dass die Gesamtkapazität der Kapazität 5 durch die Annäherung des Stoffs 1 und des Werkstoffs 3 insgesamt erhöht wurde und nun auch einen durch die Nähe des Stoffs 1 hervorgerufenen periodisch veränderlichen Anteil aufweist.

Dieser Effekt ist wie in den Figuren 3e und 3f gezeigt bei einer weiteren Annäherung des zu detektierenden Stoffs 1 an das bewegte Werkzeug 2 verstärkt ausgeprägt. Größere Teile des Werkzeugs 2 ragen in den Bereich B hinein. Dabei trägt die Bewegung des im Werkstoff 3 eingedrungenen Teils des Werkzeugs 2 und der eingedrungenen Sägezähne 20 im Wesentlichen lediglich zum Gesamtwert (Gleichanteil) der Kapazität 5 bei, da die im Werkstoff 3 eingetauchten Sägezähne 20 relativ zum Werkstoff 3 keine Flächen- und/oder Abstandsänderung der durch das Werkzeug 2 ausgebildeten Elektrode bewirken.

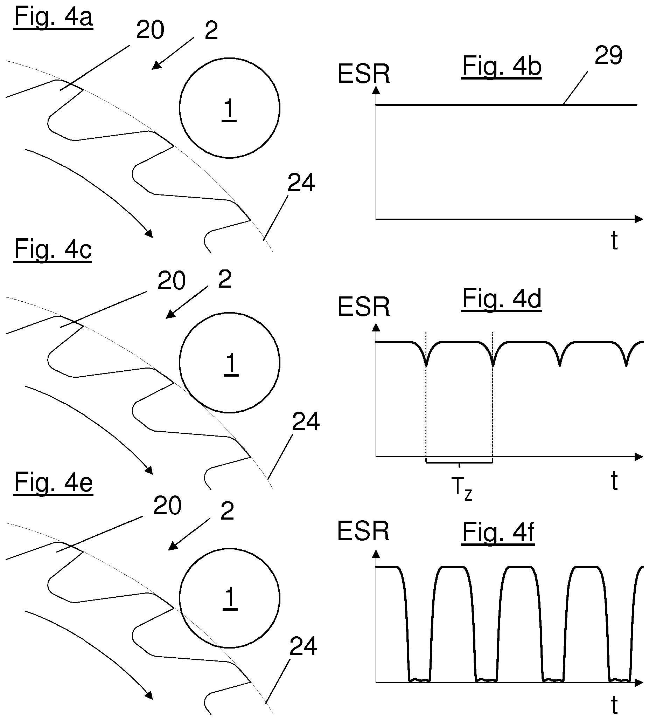

In den Figuren 4a bis 4f ist der Verlauf einer Annäherung und Kontaktierung eines Stoffs 1 an ein bzw. mit einem bewegten Werkzeug 2 mit daran ausgebildeten Sägezähnen 20 gezeigt. Die von den mit dem Werkzeug 2 mitbewegten Sägezähnen 20 beschriebene Umfangslinie 24 stellt dabei die Grenze dar, ab welcher es effektiv zu einer Berührung des Werkzeugs 2 kommen kann und entspricht somit im Wesentlichen der bei Bewegung des Werkzeugs 2 erzeugten Hüllkurve. Parallel dazu ist in den Diagrammen der zeitliche Verlauf eines Impedanzsignal 29 einer Kenngröße der mit der Kapazität 5 verbundenen Impedanz, hier speziell der mit ESR bezeichnete Ersatzserienwiderstand, gezeigt.

Dabei ist in Fig. 4a eine Situation gezeigt, in welcher der zu detektierende Stoff 1 an das bewegte Werkzeug 2 angenähert ist, ohne dieses (bzw. die Hüllkurve) zu berühren. Der in Fig. 4b gezeigte zeitliche Verlauf des Werts des Effektivserienwiderstands ist somit von der Anwesenheit des Stoffs 1 im Wesentlichen unbeeinflusst und somit konstant.

In Fig. 4c ist eine Situation gezeigt, in welcher der zu detektierende Stoff 1 derart an das bewegte Werkzeug 2 angenähert ist, dass die daran ausgebildeten Sägezähne 20 den Stoff 1 beim Vorbeibewegen kontaktieren, jedoch nicht nennenswert in diesen eingreifen. Dem in Fig. 4d gezeigten zeitlichen Verlauf des Ersatzserienwiderstands ist dabei zu entnehmen, dass dieser bei Kontaktierung des Werkzeugs 2 mit dem Stoff 1 deutlich von dieser periodisch geändert wird. So kann auch die Erfassung einer Kenngröße der mit der Kapazität 5 verbundenen Impedanz, insbesondere bei Erfassung des Ersatzserienwiderstands der Kapazität 5, zuverlässig und mit hoher Empfindlichkeit eine Berührung des Werkzeugs 2 durch den zu detektierenden Stoff 1 erkannt werden.

In Fig. 4e ist eine Annäherung des Stoffs 1 an das bewegte Werkzeug 2 gezeigt, bei welcher die am Werkzeug 2 ausgebildeten Sägezähne 20 bereits deutlich mit dem Stoff 1 in Eingriff stehen können. In Fig. 4f ist dabei dem zeitlichen Verlauf des Ersatzserienwiderstands der Kapazität 5 ein solches Kontaktieren bzw. Eingreifen deutlich zu entnehmen. Die durch die Kontaktierung des Stoffs 1 mit dem Werkzeug 2 hervorgerufene Änderung des Ersatzserienwiderstands der Kapazität 5 kann dabei einerseits durch eine auch ohne Kontaktierung bestehende kapazitive Kopplung des Stoffs 1 an die Gegenelektrode 4 der Kapazität 5 bedingt sein (Serienschaltung der Kapazitäten bzw. auch durch eine dabei eventuell geschaffene elektrisch leitfähige Verbindung des eine Elektrode der Kapazität 5 ausbildenden Werkzeugs 2 mit dem auf ein bestimmtes elektrisches Potential (beispielsweise Erdpotential) referenzierten Stoff 1.

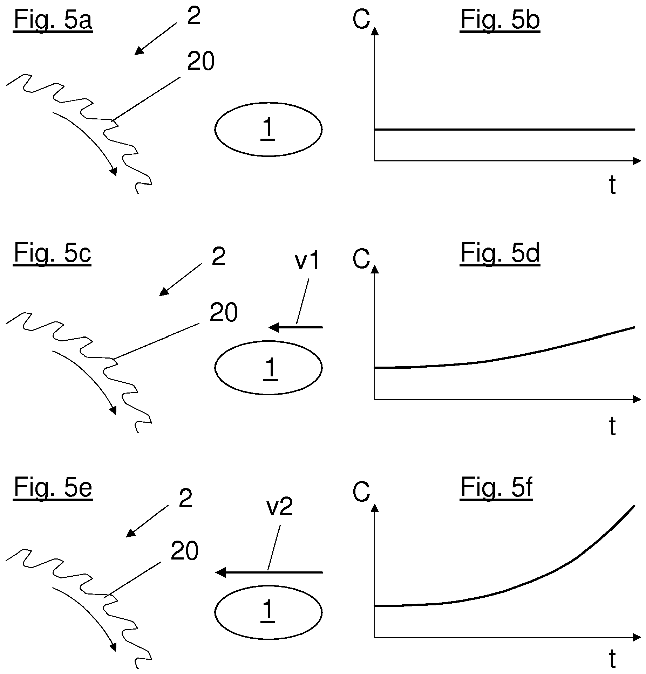

In den Figuren 5a bis 5f ist eine Annäherung des Stoffs 1 an ein bewegtes Werkzeug 2 mit verschiedenen Annäherungsgeschwindigkeiten v1, v2 aus dem Fernbereich gezeigt. In Fig. 5a ist dabei zunächst ein stillstehender zu detektierender Stoff 1, beispielsweise eine Hand eines Benutzers, in einigem Abstand, beispielsweise einigen Dezimetern, vom bewegten Werkzeug 2 gezeigt. Der in Fig. 5b gezeigte zeitliche Verlauf des Werts C der Kapazität 5 ist dabei aufgrund des konstanten Abstands konstant.

In Fig. 5c ist eine Annäherung des Stoffs 1 an das bewegte Werkzeug 2 mit einer ersten Annäherungsgeschwindigkeit v1 gezeigt. In Fig. 5d ist der dadurch hervorgerufene zeitliche Anstieg des Werts der Kapazität 5 gezeigt. Die Steigung des Kapazitätsverlaufs ist dabei der Annäherungsgeschwindigkeit proportional.

Analog dazu ist in Fig. 5e die Annäherung eines Stoffs 1 an ein bewegtes Werkzeug 2 mit einer zweiten, größeren Annäherungsgeschwindigkeit v2 gezeigt. Der in Fig. 5f gezeigte zeitliche Verlauf des Werts der Kapazität 5 verläuft dementsprechend steiler. Je schneller eine Annäherung erfolgt, desto größer ist der Gradient des sich ändernden Werts. So kann zusätzlich zur Anwesenheit eines Stoffs 1 in einem Nahbereich des Werkzeugs 2 eine Annäherung eines zu detektierenden Stoffs 1 an das Werkzeug 2 in einem Fernbereich erkannt werden.

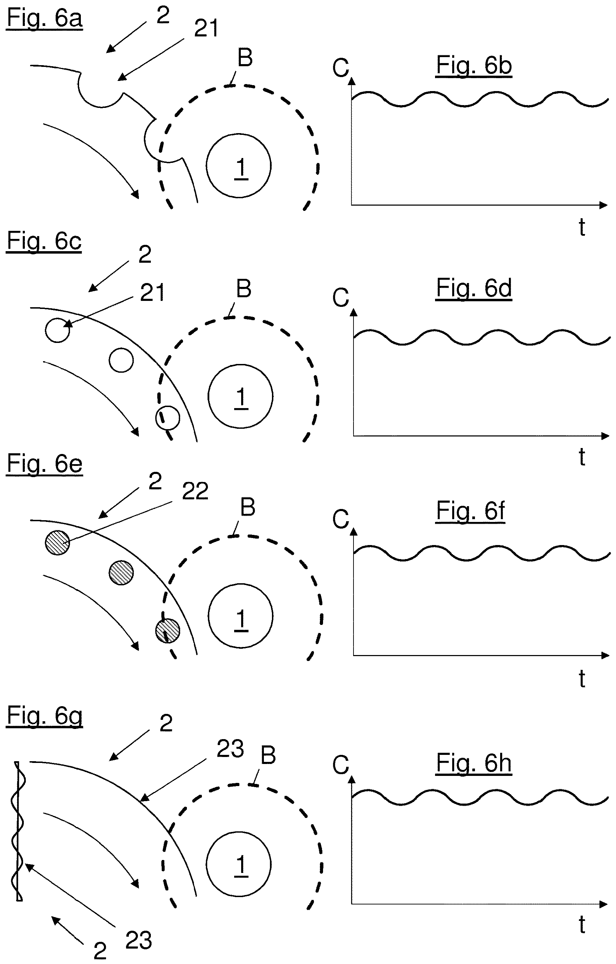

In den Figuren 6a bis 6h sind verschiedene Ausführungen von bewegten Werkzeugen 2 mit sich bei Bewegung ändernden geometrischen Eigenschaften gezeigt. So ist in Fig. 6a eine Ausführung des Werkzeugs 2 mit Materialaussparungen 21 gezeigt, durch welche die sich im Bereich B bei Bewegung des Werkzeugs 2 periodisch ändernde geometrische Eigenschaft gegeben ist. Eine solche Ausbildung des Werkzeugs 2 kann sich beispielsweise für segmentierte Schleifscheiben eignen. Wie in Fig. 6b dargestellt, wird auch bei einem so ausgebildeten Werkzeug 2 bei Anwesenheit eines zu detektierenden Stoffs eine periodische Änderung der Kapazität 5 hervorgerufen. In Fig. 6c ist eine Ausführung des Werkzeugs 2 mit Materialaussparungen 21, beispielsweise Löchern, gezeigt. Wie in Fig. 6d gezeigt, kann auch bei einem derart ausgebildetes Werkzeug 2 eine periodische Änderung der Kapazität 5 bei Anwesenheit eines zu detektierenden Stoffs 1 hervorgerufen werden. Eine solche Ausführung kann sich beispielsweise für Umfangsschleifscheiben oder auch für Sägeblätter mit sehr feiner Zahnung eignen. In Fig. 6e ist eine Ausführung eines Werkzeugs 2 dargestellt, welches über Materialauftragungen 22, beispielsweise vom Werkzeug 2 axial abstehende Materialauftragungen 22 oder auch mit einem bestimmten Material gefüllte Bohrungen im Werkzeug 2, gezeigt. Wie in Fig. 6f dargestellt, kann auch bei einem derart ausgebildeten Werkzeug 2 bei Anwesenheit eines zu detektierenden Stoffs 1 eine periodische Änderung der Kapazität 5 hervorgerufen werden. In Fig. 6g ist eine Ausführung eines Werkzeugs 2 mit durch Ausformungen 23 des Werkzeugs 2 gegebenen, sich bei Bewegung des Werkzeugs 2 periodisch ändernden geometrischen Eigenschaften gezeigt. Dabei ist eine Draufsicht und eine wie in den übrigen Figuren gezeigte Seitenansicht des Werkzeugs 2 gezeigt. So kann beispielsweise ein Umfangsbereich des Werkzeugs 2 wellig ausgeführt sein. Wie in Fig. 6h gezeigt, kann auch bei einem derart ausgeführten Werkzeug 2 eine periodische Änderung der Kapazität bei Anwesenheit eines zu detektierenden Stoffs hervorgerufen werden.

Allgemein kann gesagt werden, dass durch das Werkzeug 2 und die davon isoliert ausgebildete Gegenelektrode 4 eine Kapazität 5 mit einem radial und azimutal (bzw. polar) inhomogen elektrischen Feld ausgebildet werden kann. Die Verlauf des Felds bzw. die Inhomogenitäten des Felds können dabei der Ausformung (und ggf. Periodizität) der Werkzeuggeometrie entsprechen. Bei Bewegung des Werkzeugs 2 kann das inhomogene elektrische Feld mit dem Werkzeug 2 mittransportiert werden und bei Anwesenheit eines Stoffs 1 im Umfeld bzw. im elektrischen Feld des Werkzeugs 2 eine den Inhomogenitäten des Felds entsprechende (ggf. periodische) Änderung der Kapazität 5 hervorgerufen und erfasst werden.

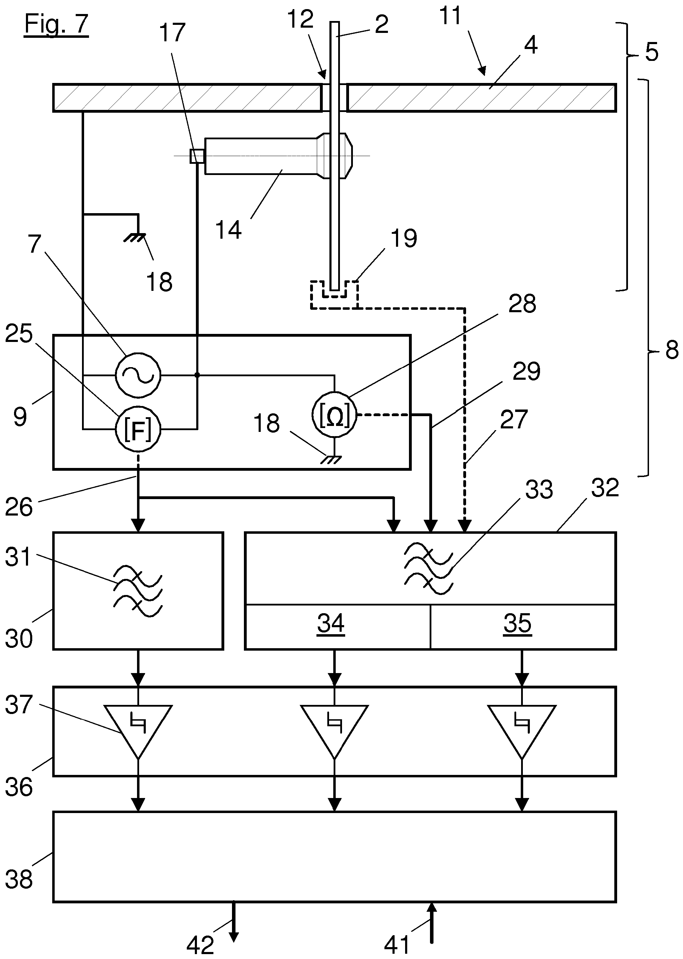

In Fig. 7 ist ein Blockschaltbild einer Ausführung eines Detektionssystems 8 zur Durchführung eines Verfahrens zur Detektion eines Stoffs 1 gezeigt. Das Detektionssystem 8 weist dabei eine Kapazität 5, welche von einem eine erste Elektrode ausbildenden Werkzeug 2 und einem eine Gegenelektrode 4 ausbildenden Sägetisch 11 ausgebildet wird, und eine Vorrichtung 9 zur Erfassung der Kapazität 5 auf. Der Sägetisch 11 ist über den Erdungsanschluss 18 geerdet und damit elektrisch mit dem Erdpotential verbunden. Das an der Sägewelle 14 eines hier nicht gezeigten Antriebs 13 montierte Werkzeug 2 steht teilweise aus einer Öffnung 12 im Sägetisch 11 vor. Zur Erfassung der Kapazität 5 durch die Vorrichtung 9 ist das Werkzeug 2 über eine Kontaktierung 17, beispielsweise einen Schleifkontakt, an der Sägewelle 14 kontaktiert. Die Vorrichtung 9 zur Erfassung der Kapazität 5 weist in der gezeigten Ausführung eine Oszillatorschaltung 7, eine Vorrichtung zur Kapazitätserfassung 25 sowie eine Vorrichtung zur Impedanzerfassung 28 auf. Bei der Oszillatorschaltung 7 kann die Kapazität 5 als ein frequenzbestimmendes Element eingesetzt werden. Über eine Charakterisierung der Betriebsparameter der Oszillatorschaltung 7, wie beispielsweise Oszillatoramplitude und/oder Oszillatorfrequenz, kann von der Vorrichtung zur Kapazitätserfassung 25 ein Kapazitätssignal 26 ausgegeben werden. Von der in diesem Ausführungsbeispiel mit einem Erdungsanschluss 18 verbundenen und somit auf Erdpotential referenzierten Vorrichtung zur Impedanzerfassung 28 kann zumindest eine Kenngröße der mit der Kapazität 5 verbundenen Impedanz, beispielsweise der Ersatzserienwiderstand, erfasst werden und ein Impedanzsignal 29 ausgegeben werden. Zur weiteren Verarbeitung der von der Vorrichtung 9 zur Erfassung der Kapazität 5 ausgegebenen Signale kann zudem eine Vorrichtung zur Frequenzerfassung 19 vorgesehen sein, welche ein Frequenzsignal 27 ausgibt.

Die in Fig. 7 zusätzlich zum Detektionssystem 8 gezeigten Vorrichtungen dienen einer Weiterverarbeitung der von der Vorrichtung 9 zur Erfassung der Kapazität 5 ausgegebenen Signale. Dabei kann zunächst von der Vorrichtung zu Annäherungserfassung 30 eine Annäherung eines Stoffs 1 an ein bewegtes Werkzeug 2, wie dies beispielsweise in den Figuren 5a bis 5f gezeigt ist, erkannt werden. Dabei kann durch einen Bandpassfilter 31 eine obere und untere Grenzfrequenz für das Kapazitätssignal 26 festgelegt werden. Das Ausgangssignal der Vorrichtung zur Annäherungserfassung 30 kann dabei der Annäherungsgeschwindigkeit v1, v2 entsprechen. Die weiter vorhandene Vorrichtung zur Annäherungserfassung 32 dient der Erfassung einer Annäherung eines Stoffs 1 an das bewegbare Werkzeug 2 in einem Nahbereich des Werkzeugs 2, wie dies beispielsweise in den Figuren 2a bis 2f bzw. 3a bis 3f dargestellt ist. Dabei kann zur Auswertung das Frequenzsignal 27, welches die Periodizität f_{z} der sich bei Bewegung des Werkzeugs periodisch ändernden geometrischen Eigenschaften des Werkzeugs 2 charakterisiert, herangezogen werden. Auch hier kann ein Bandpassfilter 33 eingesetzt werden. Die eingehenden Signale können eine Kapazitätsauswertung 34 oder eine Widerstandsauswertung 35 durchlaufen, wobei die ausgegebenen Signale eine Annäherung bzw. Berührung des zu detektierenden Stoffs 1 an das Werkzeug 2 charakterisieren. Von einer Vorrichtung zur Schwellwertdetektion 36 mit Schwellwertdetektoren 37 können Signalpegel definiert werden, ab welchem ein Schaltsignal am Ausgang der Vorrichtung zur Schwellwertdetektion 36 geliefert werden. Mit diesen Schwellwerten lassen sich Gefahrenschwellen festlegen, wodurch sich beispielsweise eine maximal zulässige Annäherungsgeschwindigkeit v1, v2 bzw. eine maximal zulässige Annäherung des zu detektierenden Stoffs 1 an das Werkzeug 2 festlegen lassen können. Die von der Vorrichtung zur Schwellwertdetektion 36 ausgegebenen Signale können schließlich von einer Auswertelogik 38 abhängig vom Betriebszustand der Werkzeugmaschine 10, welcher durch Eingangssignale 41 charakterisiert werden kann, ausgewertet werden. Auch können von der Auswertelogik 38 erwünschte Schutzmaßnahmen durch entsprechendes Setzten von Ausgangssignalen 42 eingeleitet werden.

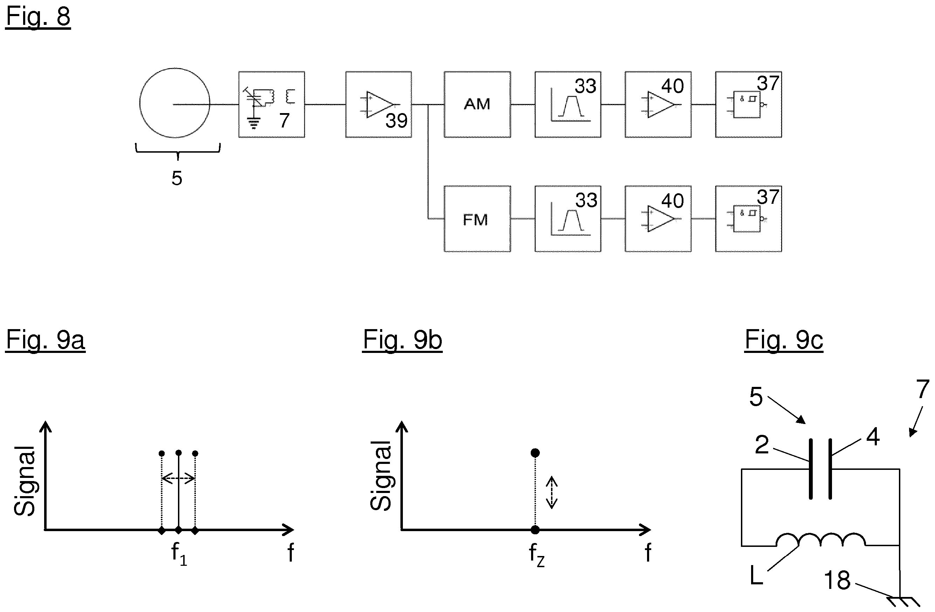

In Fig. 8 ist ein Blockschaltbild einer analog ausgelegten Variante eines Teils des Detektionssystems 8 gezeigt. Anders als dargestellt ist eine in Teilen oder zur Gänze in Digitaltechnik implementierte Variante ist jedoch auch denkbar. Die gezeigte Variante umfasst eine Kapazität 5, eine mit dieser betriebene Oszillatorschaltung 7 und zwei parallele Demodulationszweige zur Charakterisierung der Kapazität 5. Die Kapazität 5 ist dabei wie in Fig. 9c illustriert von einem Werkzeug 2 und einer Gegenelektrode 4 ausgebildet. Die Gegenelektrode 4 kann dabei über einen Erdungsanschluss 18 mit dem Erdpotential verbunden sein. Zur Charakterisierung der Kapazität 5 bildet diese in der in Fig. 8 gezeigten Ausführung einen frequenzbestimmenden Teil einer Oszillatorschaltung 7 aus, welche neben der Kapazität 5 eine Induktivität L aufweist. Diese Induktivität L kann beispielsweise in Form einer Primärwindung eines Übertragers bzw. Transformators ausgebildet sein. Zur Charakterisierung der Kapazität 5 folgt auf einen Hochfrequenzverstärker 39 ausgangsseitig ein AM-Demodulator AM und parallel dazu ein FM-Demodulator FM. Bei einer wie zuvor beschriebenen Änderung der Kapazität 5 kommt es zu einer Änderung der Oszillatorfrequenz bzw. Oszillatoramplitude, welche durch die Demodulationszweige erfasst werden können. Dies ist in den Fig. 9a und 9b illustriert.

Fig. 9a zeigt dabei den Fall einer auftretenden Frequenzmodulation der Oszillatorfrequenz der Oszillatorschaltung 7 in einer Frequenzdarstellung. Dabei stellt (wie auch in Figur 9b) die mit f bezeichnete Abszisse die Frequenzachse dar und die mit Signal bezeichnete Ordinate die Amplitude der Oszillatorschaltung 7 dar. Bei einer ungestörten Kapazität 5, also bei Abwesenheit eines zu detektierenden Stoffs 1, stellt sich zunächst eine erste Oszillatorfrequenz f₁ mit einer gegebenen Amplitude ein. Im Frequenzbild der Fig. 9a entspricht dies einem Signal bei f₁. Wird die Kapazität 5 nun periodisch durch Anwesenheit eines zu detektierenden Stoffs 1 verändert - wie dies etwa in den Figuren 2a bis 2f bzw. 3a bis 3f gezeigt ist - wird es zu einer periodischen Zu- und Abnahme der Oszillatorfrequenz kommen. Im Frequenzbild der Fig. 9a wird also das Signal periodisch zwischen einer höheren und einer niedrigeren Frequenz schwanken. Diese Frequenzmodulation findet mit der Periodizität f_{z} der sich bei Bewegung des Werkzeugs 2 periodisch ändernden geometrischen Eigenschaft des Werkzeugs 2 statt. Eine FM-Demodulation liefert ein Wechselspannungssignal, dessen Auftreten und Amplitude in direktem Zusammenhang mit der Anwesenheit und der Nähe des zu detektierenden Stoffs 1 in einem Bereich des Werkzeugs 2 steht. Im Falle einer (monotonen) Annäherung eines zu detektierenden Stoffs 1 an das Werkzeug 2 aus einem Fernbereich würde das Signal (monoton) in eine Richtung entlang der Frequenzachse wandern, was sich auch durch eine FM-Demodulation in Form eines sich (monton) ändernden Signals detektieren ließe. Als Referenzfrequenz zur Demodulation kann vorteilhafter Weise ein Wechselspannungssignal mit der Periodizität f_{z} verwendet werden. Durch einen bei der Periodizität f_{z} durchlässigen Bandpassfilter 33 kann gezielt auf das Auftreten eines durch die periodische Änderung der Kapazität 5 hervorgerufenen Signals geachtet werden. Dadurch kann sich eine große Stabilität des Detektionsverfahrens gegenüber Störungen und Gleichanteilen ergeben. Ein Wechselstromverstärker 40 kann anschließend das gefilterte Ausgangssignal an einen Schwellwertdetektor 37 liefern.

Bei einer Berührung des Werkzeugs 2 durch den Stoff 1 kann es zunächst zu einer Dämpfung der Oszillatoramplitude kommen. Bei anhaltendem Eingriff kann es zu einer periodischen Kontaktierung des Stoffs 1 mit dem Werkzeug 2 kommen. Analog zur FM-Demodulation kann nun auch eine AM-Demodulation des modulierten Ausgangssignals der Oszillatorschaltung 7 erfolgen. So kann aus einer Amplitudenmodulation der Oszillatoramplitude ein Wechselspannungssignal gewonnen werden, dessen Auftreten und Amplitude in direktem Zusammenhang mit einer Kontaktierung des zu detektierenden Stoffs 1 mit dem Werkzeug 2 steht. Fig. 9b zeigt den Fall einer bei der Periodizität f_{z} auftretenden Amplitudenmodulation der Oszillatoramplitude. Da die Amplitudenmodulation nur bei periodischer Kontaktierung des Stoffs 1 mit dem Werkzeug 2 und somit mit der Periodizität f_{z} der sich bei Bewegung des Werkzeugs 2 periodisch ändernden geometrischen Eigenschaft des Werkzeugs 2 auftritt, kann mit einem Bandpassfilter 33 auf das Auftreten des demodulierten Signals bei der Periodizität f_{z} geachtet werden. Dadurch kann die Detektion einer Berührung des Werkzeugs 2 durch den Stoff 2 zuverlässig und mit hoher Empfindlichkeit erfolgen. Auch hier kann ein Wechselstromverstärker 40 das gefilterte Ausgangssignal an einen Schwellwertdetektor 37 liefern.

**Bezugszeichenliste:**

| | |
|---|---|
| Stoff | 1 |
| Werkzeug | 2 |
| Werkstoff | 3 |
| Gegenelektrode | 4 |
| Kapazität | 5 |
| Gehäuse | 6 |
| Oszillatorschaltung | 7 |
| Detektionssystem | 8 |
| Vorrichtung | 9 |
| Werkzeugmaschine | 10 |
| Sägetisch | 11 |
| Öffnung | 12 |
| Antrieb | 13 |
| Sägewelle | 14 |
| Bedienelemente | 15 |
| Schaltkasten | 16 |
| Kontaktierung | 17 |
| Erdungsanschluss | 18 |
| Vorrichtung Frequenzerfassung | 19 |
| Sägezahn | 20 |
| Materialaussparung | 21 |
| Materialauftragung | 22 |
| Ausformung | 23 |
| Umfangslinie | 24 |
| Vorrichtung Kapazitätserfassung | 25 |
| Kapazitätssignal | 26 |
| Frequenzsignal | 27 |
| Vorrichtung Impedanzerfassung | 28 |
| Impedanzsignal | 29 |
| Vorrichtung Annäherungserfassung | 30 |
| Bandpass-Filter | 31 |
| Vorrichtung Annäherungserfassung | 32 |
| Bandpass-Filter | 33 |
| Kapazitätsauswertung | 34 |
| Widerstandsauswertung | 35 |
| Vorrichtung Schwellwertdetektion | 36 |
| Schwellwertdetektor | 37 |
| Auswerte-Logik | 38 |
| Hochfrequenzverstärker | 39 |
| Wechselspannungsverstärker | 40 |
| Eingangssignale | 41 |
| Ausgangssignale | 42 |
| Bereich | B |
| Periodendauer | T_{Z} |
| Periodizität | f_{Z} |
| Annäherrungsgeschwindigkeit | v1 |
| Annäherrungsgeschwindigkeit | v2 |
| AM-Demodulator | AM |
| FM-Demodulator | FM |
| Induktivität | L |
| Wert Kapazität | C |
| erste Frequenz | f₁ |

## Patentansprüche

1. Verfahren zur Detektion eines Stoffs (1), vorzugsweise von menschlichem Gewebe, in einem Umfeld eines bewegbaren Werkzeugs (2), wobei sich der zu detektierende Stoff (1) in seinen elektrischen Eigenschaften von einem mittels des bewegbaren Werkzeugs (2) bearbeitbaren Werkstoffs (3) unterscheidet, und wobei bei dem Verfahren eine Änderung einer von dem Werkzeug (2) und einer von dem Werkzeug (2) elektrisch isolierten Gegenelektrode (4) ausgebildeten Kapazität (5) erfasst wird, **dadurch gekennzeichnet, dass** eine periodische Änderung der Kapazität (5) erfasst wird, wobei diese Änderung dadurch hervorgerufen wird, dass der Stoff (1) in einem Bereich (B) relativ zum Werkzeug (2) angeordnet ist und sich bei einer Bewegung des Werkzeugs (2) eine geometrische Eigenschaft des Werkzeugs (2) in diesem Bereich (B) periodisch ändert, wobei zur Erfassung der Änderung der Kapazität (5) die Kapazität (5) als ein frequenzbestimmendes Element einer elektronischen Oszillatorschaltung (7), vorzugsweise einer LC-Oszillatorschaltung, eingesetzt wird.

2. Verfahren nach Anspruch 1, wobei das Werkzeug (2) ein zerspanendes Werkzeug, vorzugsweise ein Kreissägeblatt, ist.

3. Verfahren nach einem der Ansprüche 1 oder 2, wobei die sich in dem Bereich (B) bei Bewegung des Werkzeugs (2) periodisch ändernde geometrische Eigenschaft durch
- eine Schneidengeometrie zumindest einer Werkzeugschneide, insbesondere durch eine Abfolge von Sägezähnen (20), und/oder
- zumindest eine Materialaussparung (21) und/oder
- zumindest eine Materialauftragung (22) und/oder
- zumindest eine Ausformung (23)
des Werkzeugs (2) gegeben ist.

4. Verfahren nach zumindest einem der vorangehenden Ansprüche, wobei die Bewegung des Werkzeugs (2) eine geführte Bewegung, vorzugsweise eine Rotationsbewegung, ist.

5. Verfahren nach zumindest einem der vorangehenden Ansprüche, wobei die Gegenelektrode (4) von zumindest einem Teil eines Gehäuses (6), in welchem das Werkzeug (2) in Montagelage angeordnet ist, und/oder einem Anbauteil ausgebildet wird.

6. Verfahren nach zumindest einem der vorangehenden Ansprüche, wobei weiter die Periodizität (f_{Z}) der sich in dem Bereich (B) bei Bewegung des Werkzeugs (2) periodisch ändernden geometrischen Eigenschaft des Werkzeugs (2) erfasst wird.

7. Verfahren nach zumindest einem der vorangehenden Ansprüche, wobei eine durch die periodische Änderung der Kapazität (5) verursachte Frequenzmodulation der Oszillatorfrequenz (f_{O}) der Oszillatorschaltung (7) zur Detektion des zu detektierenden Stoffs (1) erfasst wird.

8. Verfahren nach Anspruch 6 und 7, wobei die Frequenzmodulation unter Verwendung der Periodizität (f_{Z}) der sich in dem Bereich (B) periodisch ändernden geometrischen Eigenschaft des Werkzeugs (2) demoduliert wird.

9. Verfahren nach zumindest einem der vorangehenden Ansprüche, wobei weiter eine - insbesondere durch Berührung des Werkzeugs (2) durch den zu detektierenden Stoff (1) verursachte - Amplitudenmodulation der Oszillatoramplitude der Oszillatorschaltung (7) erfasst wird.

10. Verfahren nach Anspruch 6 und 9, wobei die Amplitudenmodulation unter Verwendung der Periodizität (f_{Z}) der sich in dem Bereich (B) periodisch ändernden geometrischen Eigenschaft des Werkzeugs (2) demoduliert wird.

11. Verfahren nach zumindest einem der vorangehenden Ansprüche, wobei weiter eine Änderung der Gesamtkapazität der Kapazität (5) zur Detektion des zu detektierenden Stoffs (1) im Fernbereich des Werkzeugs (2) erfasst wird.

12. Verfahren nach zumindest einem der vorangehenden Ansprüche, wobei zur Erfassung der Änderung der Kapazität (5) zumindest eine Kenngröße der mit der Kapazität (5) verbundenen Impedanz (Z), vorzugsweise der Ersatzserienwiderstand (ESR), erfasst wird.

13. Detektionssystem (8) zur Durchführung des Verfahrens nach einem der Ansprüche 1 bis 12, umfassend ein bewegbares Werkzeug (2), wobei das Werkzeug (2) eine sich in dem Bereich (B) bei einer Bewegung periodisch ändernde geometrische Eigenschaft aufweist, eine von dem Werkzeug (2) elektrisch isolierte Gegenelektrode (4), und eine Vorrichtung (9) zur Erfassung einer von dem Werkzeug (2) und der Gegenelektrode (4) ausgebildeten Kapazität (5), deren periodische Änderung erfasst wird.

14. Werkzeugmaschine (10), insbesondere Formatkreissäge, mit einem Detektionssystem (8) nach Anspruch 13.

## Claims

1. A method for detecting a substance (1), preferably human tissue, in the vicinity of a movable tool (2), wherein the substance (1) to be detected differs in its electrical properties from a material (3) which can be processed by means of the movable tool (2), and wherein in the method a change in a capacitance formed by the tool (2) and a counterpart electrode (4) that is electrically insulated from the tool (2) is detected, **characterized in that** a periodic change in the capacitance (5) is detected, wherein said change is caused by the substance (1) being arranged in a region (B) relative to the tool (2) and by a geometrical property of the tool (2) in said region (B) changing periodically upon a movement of the tool (2), wherein to detect the change in capacitance (5) the capacitance (5) is used as a frequency-determining element of an electronic oscillator circuit (7), preferably an LC oscillator circuit.

2. A method as set forth in claim 1 wherein the tool (2) is a machining tool, preferably a circular saw blade.

3. A method as set forth in one of claims 1 and 2 wherein the geometrical property which changes periodically in the region (B) upon movement of the tool (2) is given by
- a cutting geometry of at least one tool cutting edge, in particular by a succession of saw teeth (20), and/or
- at least one material recess (21), and/or
- at least one material deposit (22), and/or
- at least one shaped configuration (23).

4. A method as set forth in at least one of the preceding claims wherein the movement of the tool (2) is a guided movement, preferably a rotary movement.

5. A method as set forth in one of the preceding claims wherein the counterpart electrode (4) is formed by at least a part of a housing (6) in which the tool (2) is arranged in the assembled position and/or an attachment part.

6. A method as set forth in at least one of the preceding claims wherein moreover the periodicity of the geometrical property of the tool (2), that changes periodically in the region (B) upon movement of the tool (2), is detected.

7. A method as set forth in at least one of the preceding claims wherein a frequency modulation, caused by the periodic change in the capacitance (5), of the oscillator frequency (fₒ) of the oscillator circuit (7) is detected to detect the substance to be detected (1).

8. A method as set forth in claim 6 and claim 7 wherein the frequency modulation is demodulated using the periodicity (f_{z}) of the geometrical property of the tool (2), that changes periodically in the region (B).

9. A method as set forth in at least one of the preceding claims wherein moreover amplitude modulation - caused in particular by contact of the tool (2) by the substance (1) to be detected - of the oscillator amplitude of the oscillator circuit (7) is detected.

10. A method as set forth in claim 6 and claim 9 wherein the amplitude modulation is demodulated using the periodicity (f_{z}) of the geometrical property of the tool (2), that changes periodically in the region (B).

11. A method as set forth in at least one of the preceding claims wherein moreover a change in the total capacitance of the capacitance (5) is detected for detection of the substance (1) to be detected in the far region of the tool (2) .

12. A method as set forth in at least one of the preceding claims wherein to detect the change in capacitance (5) at least one parameter of the impedance (Z) associated with the capacitance (5), preferably the equivalent series resistance (ESR), is detected.

13. A detection system (8) for carrying out the method as set forth in one of claims 1 through 12 including a movable tool (2), wherein the tool (2) has a geometrical property which changes periodically in the region (B) upon a movement, a counterpart electrode (4) electrically insulated from the tool (2), and a device (9) for detecting a capacitance (5), formed by the tool (2) and the counterpart electrode (4), of which a periodical change is detected.

14. A machine tool (10), in particular a sliding table saw, comprising a detection system (8) as set forth in claim 13.

## Revendications

1. Procédé de détection d'une matière (1), de préférence de tissu humain, dans un environnement d'un outil mobile (2), dans lequel la matière à détecter (1) se différencie dans ses propriétés électriques d'une matière première (3) pouvant être traitée au moyen de l'outil mobile (2), et dans lequel lors du procédé, une modification d'une capacité (5) formée par l'outil (2) et d'une contre-électrode (4) isolée électriquement de l'outil (2) est détectée, **caractérisé en ce qu'**une modification périodique de la capacité (5) est détectée, dans lequel cette modification est provoquée du fait que la matière (1) est disposée dans une zone (B) par rapport à l'outil (2) et lors d'un mouvement de l'outil (2), une propriété géométrique de l'outil (2) dans cette zone (B) se modifie périodiquement, dans lequel pour détecter la modification de la capacité (5), la capacité (5) est mise en place comme un élément déterminant la fréquence d'un circuit oscillant électronique (7), de préférence d'un circuit oscillant LC.

2. Procédé selon la revendication 1, dans lequel l'outil (2) est un outil d'usinage, de préférence, une lame de scie circulaire.

3. Procédé selon l'une des revendications 1 ou 2, dans lequel la propriété géométrique se modifiant périodiquement dans la zone (B) lors du mouvement de l'outil (2) est donnée par
- une géométrie de coupe d'au moins un tranchant d'outil, plus particulièrement par une suite de dents de scie (20), et / ou
- au moins un évidement de matière (21) et / ou
- au moins une application de matière (22) et /ou
- au moins une forme (23)
de l'outil (2).

4. Procédé selon au moins l'une des revendications précédentes, dans lequel le mouvement de l'outil (2) est un mouvement guidé, de préférence un mouvement de rotation.

5. Procédé selon au moins l'une des revendications précédentes, dans lequel la contre-électrode (4) est constituée par au moins une partie d'un corps (6), dans lequel l'outil (2) est disposé en position de montage, et / ou une partie de montage.

6. Procédé selon au moins l'une des revendications précédentes, dans lequel, en outre, est détectée la périodicité (f_{Z}) de la propriété géométrique de l'outil (2), se modifiant périodiquement dans la zone (B) lors du mouvement de l'outil (2) .

7. Procédé selon au moins l'une des revendications précédentes, dans lequel une modulation de fréquence, provoquée par la modification périodique de la capacité (5), de la fréquence oscillatoire (fₒ) du circuit oscillant (7) pour la détection de la matière à détecter (1), est détectée.

8. Procédé selon la revendication 6 et 7, dans lequel la modulation de fréquence en utilisant la périodicité (f_{Z}) de la propriété géométrique, se modifiant périodiquement dans la zone (B), de l'outil (2) est démodulée.

9. Procédé selon au moins l'une des revendications précédentes, dans lequel, en outre, est détectée une modulation d'amplitude de l'amplitude oscillante du circuit oscillant (7) - provoquée plus particulièrement par contact de l'outil (2) par la matière à détecter (1) .

10. Procédé selon la revendication 6 et 9, dans lequel la modulation d'amplitude en utilisant la périodicité (f_{Z}) de la propriété géométrique, se modifiant périodiquement dans la zone (B), de l'outil (2) est démodulée.

11. Procédé selon au moins l'une des revendications précédentes, dans lequel, en outre, une modification de la capacité totale de la capacité (5) pour la détection de la matière à détecter (1) est détectée dans la zone éloignée de l'outil (2) .

12. Procédé selon au moins l'une des revendications précédentes, dans lequel pour détecter la modification de la capacité (5) est détectée au moins un paramètre de l'impédance (Z) reliée à la capacité (5), de préférence, la résistance série de remplacement (ESR).

13. Système de détection (8) pour réaliser le procédé selon l'une des revendications 1 à 12, comprenant un outil mobile (2), dans lequel l'outil (2) présente une propriété géométrique se modifiant périodiquement dans la zone (B) lors d'un mouvement, une contre-électrode (4) isolée électriquement de l'outil (2), et un dispositif (9) de détection d'une capacité (5), formée par l'outil (2) et la contre-électrode (4), de laquelle une modification périodique est détectée.

14. Machine-outil (10), plus particulièrement scie-circulaire pour mise au format, avec un système de détection (8) selon la revendication 13.
